# EUROPEAN PATENT SPECIFICATION

(11) **EP 0 606 755 B1**
(45) Date of publication and mention of the grant of the patent: **23.02.2000**
(21) Application number: 93310427.5
(22) Date of filing: 22.12.1993
(51) Int. Cl.: G06F 3/16

(54) **Dictation apparatus that is a combination of a portable computer and a hand set**
Aus einer Kombination von tragbaren Rechner und Handapparat bestehendes Diktiergerät
Appareil à dicter constitué d'une combinaison d'un ordinateur portatif et d'un combiné

(30) Priority: 28.12.1992 US 997060
(43) Date of publication of application: 20.07.1994
(73) Proprietor: DICTAPHONE CORPORATION, Stratford, CT 06497 (US)
(72) Inventor: Ellis, David A., Wallingford, Connecticut 06492 (US); Heidari, Ryan A., Encinitas, California 92024 (US)
(74) Representative: Holmes, Miles Keeton

(56) References cited:
- EP-A- 0 505 304
- DE-A- 3 927 234
- US-A- 5 036 539
- ELEKTRONIK vol. 37, no. 22 , 28 October 1988 , MUNCHEN DE pages 126 - 130 XP111741 BRENNER 'SPRACHAUSGABE-SYSTEM MIT MINIMALEM AUFWAND REALISIEREN'

## Description

This invention resides in the field of voice processing and more specifically is directed to dictation equipment that is portable or of the desk top and hand held variety. There are many systems for voice processing wherein a message is recorded and subsequently played back as required. Included in such voice processing systems are telephone answering machines, loggers, dictation equipment and the like. The instant invention is directed to dictation equipment and particularly to portable dictation equipment whereby dictation can be accomplished at any location with equipment that provides convenience in addition to mobility. More specifically, it would be advantages for an owner of a lap top or hand held computer to be able to use the same for dictation.

A large number of hand held, self contained dictation units are known, as for example Dictaphone Corp. model no. 1253. In addition, there are desk top dictation units, such as that sold by Dictaphone Corp. under the trade mark "ECXII". Although these systems work well for their intended purpose, it would be desirable to be able to use a portable computer, such as a lap top or palm top computer for the purpose of voice processing. The advantage to using such a computer in the field of voice processing is that of convenience as well as tighter integration of voice and data, such as voice annotation and the like.

There are presently different types of equipment that provide dictation capability to a computer. These units require the use of a smart card that is inserted into the computer for accomplishing dictation. A hand microphone is provided which sends analogue voice signals that are converted by the smart card to digital signals. With such prior units, the keyboard is used for control purposes. It clearly would be advantageous to have a combination portable computer and hand set in which no disk, tape and card or the like is required and one in which control is through the hand set in the standard manner. In addition, lap top computers do not have the size that allows the convenient reception of smart cards.

Reference is made to EP-A-0505304 which describes a portable computer device for audible processing of electronic documents. A number of electronic documents in digital data format are coupled to and stored within random access memory within the device via an interface from a host computer, as strings of characters which may comprise encoded words, syllables or phonetic codes. The device preferably utilises a limited number of tape recorder-like switches. In response to a single operation of a "play" switch, these electronic documents are then sequentially coupled to a text-to-speech conversion application and converted to audible speech through a speaker. The device also includes a microphone and analog-to-digital conversion circuitry which permit a spoken input to be digitised, stored, and replayed in conjunction with a selected electronic document.

In one aspect, the invention provides sound recording and reproduction apparatus for dictation, comprising:
a dictation input unit comprising a housing, a microphone in said housing, converter circuitry for converting the analog output signal from the microphone into a digital signal suitable for storage in a digital memory;
a general purpose computer comprising a processor circuit, a digital memory, and a communications port;
a communications link plug connected in the port of the computer for communicating signals between the input unit and the computer characterised by:
recording control means including a manual record control on said housing for sending a control signal over the communications link to control the computer to record the digital signal from the input unit circuitry into the computer memory; and
playback control means including a manual playback control on said housing for sending a control signal over the communications link to the computer to control the playback of signals directly from the computer memory.

In a second aspect, the invention provides dictation apparatus for connection to a computer to form a dictation system, the apparatus comprising an input unit and a communications link for coupling the unit to a said computer, the unit comprising:
a housing;
a microphone mounted in said housing for receiving speech and for transforming the speech into an analog voice signal;
convener circuitry in said housing for convening the analog voice signal into a digital voice signal of a form suitable for storage in a digital computer memory;
an output for outputting the digital signals from the unit; characterised in that the unit is operable to present the digital signals as a real-time representation of the speech as the speech is received, whereby the signals can be communicated to the computer to effect a live recording into said computer, the unit being further characterised by manually operable record and playback controls on said housing for generating control signals for outputting to the communications link to control the computer, the record control being operable to develop an electrical record control signal for controlling a recording operation for recording speech into said computer, and said playback control being operable to develop an electrical playback control signal for controlling a playback operation for the playback of speech directly from the computer.

In a preferred embodiment a portable dictation system is described which is combination of a portable computer and a hand set. The portable computer can be any personal computer, but it has particular utility in a lap top computer or a palm type computer. The hand set is attachable to the computer and has a digital signal processor therein that converts analog voice signals to digital samples and compresses the digital voice samples to reduce storage and transmission requirements. A microphone in the hand set receives audible dictation which is then sampled by the analog to digital convener which delivers digital voice samples to the digital samples processor for compression.

The central processor of the computer receives the compressed voice samples and stores such data in its memory. Upon completion of dictation session, the hand set can be disconnected and the computer can be used for other purposes. When further dictation is to be carried out, or messages stored in the memory of the computer are to be transcribed, the hand set can be reconnected to the computer for the purpose of either additional dictation or receiving the stored voice signals. Controls are provided in the hand set to actuate the voice samples from the computer which are the expanded by the digital signal processor, convened from digital to analog and the sent over a speaker to be heard by the operator.

The above is performed without the need of an item such as a smart card being inserted into the computer. Only a port such as a RS232 serial port, need be provided to the computer.

The invention will be better understood from the following non-limiting description of an example thereof given with refaence to the accompanying drawings in which:-
FIG 1 is a block diagram showing the combination of a computer and hand set in which the invention can be carried out,
FIG 2 is a plan view of a hand set shown in FIG 1, and
FIG 3 is a flow chart showing the steps of the processing with the upper portion showing the information flow within the hand set, and the lower portion showing the information flow within the computer.

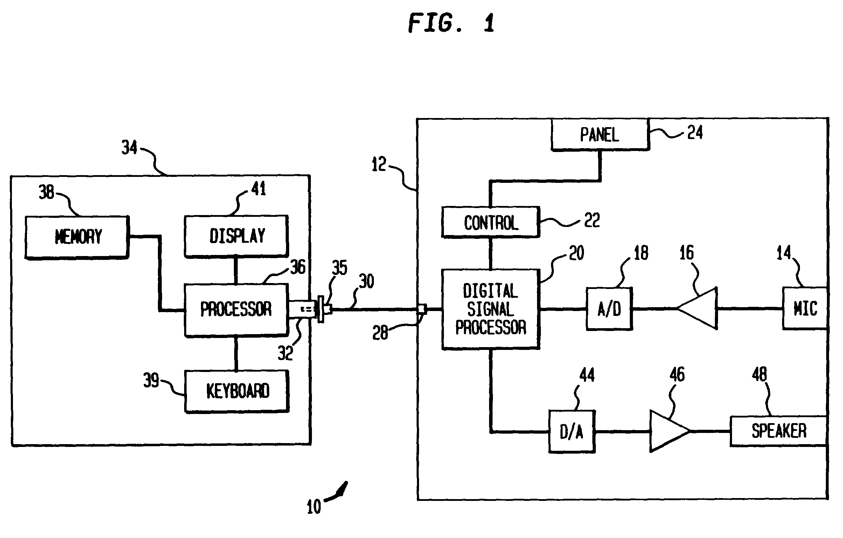

FIG 1 is a block diagram of a combination portable computer and hand set shown generally at 10 that illustrates the combination of a portable computer and a hand set in which the instant invention may be practiced. The handset has a housing 12 with a microphone 14 contained therein. The microphone 14 is in communication with an amplifier 16 which in turn is in communication with an analog to digital (A/D) converter 18. A digital signal processor 20 is mounted within the housing and is in communication with the A/D converter 18. The digital signal processor 20 can be a typical off the shelf DSP hardware that is operative to compress data, as for example from 64 to 4.8 kilobits per second. An example of a processor 20 that can be used as a digital signal processor is a model C5X processor family available from Texas instruments, Dallas, Texas. Such a processor can be programmed to perform functions such as speed up and slow down of voice without pitch distortion, automatic gain control (AGC) and voice recognition as desired.

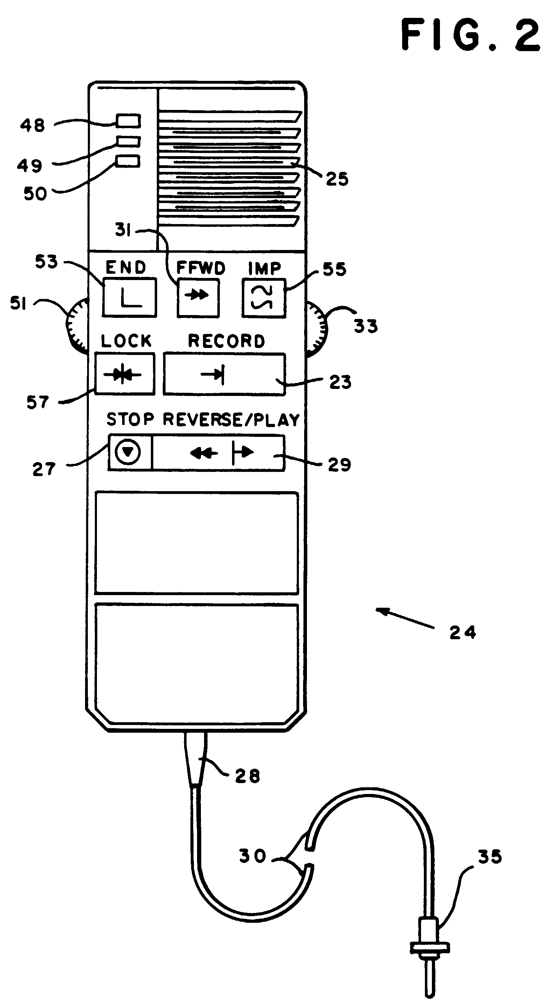

The digital signal processor 20 is in communication with a controller 22 that includes a panel 24, and, as shown in Fig.2, has the normal operating controls such as record 23, replay speaker 25, stop 27, playback 29, fast forward 31, volume control 33 and the like that are associated with dictation equipment.

A battery (not shown) provides the power for the hand set 24. In communication with the digital signal processor 20 (Fig.1) is an RS232 serial port 28 to which a lead 30 can be connected. In communication with the processor 20 is an analogue to digital (A/D) converter 18. An amplifier 46 is in connection with the D/A converter 44 and is in turn in connection with the speaker 48.

Referring skill to Fig.1, an RS232 port 32 is in communication the processor 36 of the computer 34 and is operative to receive the connector portion 35 of the lead 30. Also included in the computer 34 is a memory 38 for storage of the operating instructions and data. The processor 36 is in communication with a keyboard 39 and a display 41. Needless to say, the portable computer can be one of a number of commercially available computers such as a Compaq lap top computer model LTEL light/25(™), a DELL 380(™) lap top computer and an NCR computer model 3170(™).

With particular reference to FIG 2, details of the controls for the hand set will be described. The hand set includes the combination speaker 25/microphone 14 (is preferably a single unit with both speaker and microphone capabilities) and LEDs 48-50. LED 48 indicates when the system is enabled, LED 49 indicates when recording is taking place and LED 50 indicates when playback in occurring 50. On one side of the microphone is a volume control 33, and a speed up, slow down control 51 is on the opposite side. An end button 53 is provided to indicate when the end of a dictation session is achieved, the fast forward button 31, for the purpose of scanning through digital speech, and an impression button 55 which is used to mark a spot for fast identification. Adjacent to these buttons is a lock button 57 which locks the system in the recording mode, and the record button 23 that serves the purpose of enabling the recording session. Below these is a stop button 27 for the purpose of stopping the fast forward and the rewind button 29 that skips backward through the dictation. Secured to the hand set is a pair of wires 28 which serve as the RS232 link.

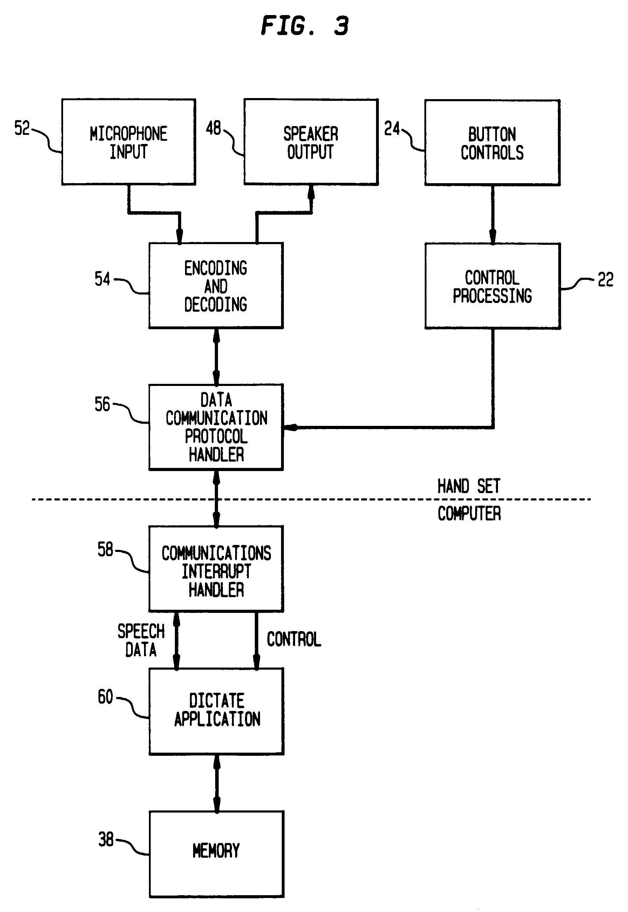

With reference to FIG 3 a general description will be given of the system processing. Initially, information is input 52 through the microphone 14. This information is encoded in step 54 which involves sampling of the incoming analog signal, compression of the digitized signals, automatic gain control, speed control and the like. The protocol is then carried out at step 56 for transmission over the communication link 30. Both speech data and control data are transmitted on the same line 30 (Fig.1). In the computer processor 36, communications handling takes place at step 58 and the dictation is achieved at step 60. After the dictation is carried out, it is stored in the memory 38 and the storage address is produced on the computer monitor. In order to recover speech data, the panel controls 24 are operated to enable playback 29 and the controller 22 communicates with the data communications protocol 56 for the purpose of initiating a recall operation. Once more, the communication handler 58 retrieves from the memory 38 the information that is sought. The data then goes from the memory 38 through the interrupt handler through the protocol 56 is decoded and eventually output on the speaker 48.

In operation, the hand held device 10 and the portable computer 34 are placed in communication with one another by connection of the lead 30 into the RS232 serial port 32 of the computer 34, and the hand set 10 is operated in much the same conventional manner as any other hand set attached to the base of a dictation machine. The primary difference is that the capability for voice compression is housed in the hand set as opposed to being in the base of dictation equipment. With this arrangement, both control data as well as digitized voice data is transmitted on the same line 30. More specifically, the operator enters a file name through the keyboard 39 of the computer to identify the speech segment. The operator then will press the record button 23 on the panel 24 and speak through the microphone 14. The voice signals will be amplified by the amplifier 16 and sampled by the A/D converter 18. The digital signal will then be compressed by the digital signal processor 20, as for example, from 64 kilobits per second to 4.8 kilobits per second. The rate is not critical to the instant invention so long as it is a low rate with good sound quality. The compressed digital voice samples are then sent to the processor 36 which receives the same and stores the data in the memory 38. At this point, the hand set 12 may be disconnected from RS232 port 32 and the portable computer 34 can be used for other purposes. When one wishes to retrieve the stored voice message then the hand set 12 will be connected once more to the portable computer 34 through the RS232 ports 32, the speech portion will be identified by entering the appropriate file name through the keyboard 39 and the speaker function of the hand set will be operated. More specifically, the reverse/playback button 29 on the panel 24 will be activated and digital data will be transferred from the memory 38 to the processor 36 through the RS232 ports 20-32 to be expanded by the digital signal processor 20 of the hand set 12. The data will then be sent to the D/A converter 44, onto the amplifier 46 and received by the speaker 48 to be received by the operator. At this point, the message can be either listened to or transcribed.

Thus, what has been shown and described is a combination hand set 12 and portable computer 42, wherein direct communication can be held between a hand set and a portable computer without need of a storage disk, extra internal hardware or the like being received or located within the computer 42 and without total reliance upon keyboard entry.

The above embodiments have been given by way of illustration only, and other embodiments of the instant invention will be apparent to those skilled in the art from consideration of the detailed description.

## Claims

1. Sound recording and reproduction apparatus (10) for dictation, comprising:
a dictation input unit comprising a housing (12), a microphone (14) in said housing, converter circuitry (18, 20) for converting the analog output signal from the microphone into a digital signal suitable for storage in a digital memory;
a general purpose computer (34) comprising a processor circuit (36), a digital memory (38), and a communications port (32);
a communications link (30) plug connected in the port (32) of the computer for communicating signals between the input unit and the computer; characterised by:
recording control means (22,24) including a manual record control on said housing for sending a control signal over the communications link to control the computer to record the digital signal from the input unit circuitry into the computer memory; and
playback control means (22,24) including a manual playback control on said housing, for sending a control signal over the communications link to the computer to control the playback of signals directly from the computer memory.

2. Apparatus according to claim 1, wherein the port is a data port.

3. Apparatus according to claim 1 or 2, wherein the port of the computer includes an industry standard port receptacle (32), the communications link comprises a conductor terminated by an industry standard plug (35) which can be plug connected to plug into the receptacle.

4. Apparatus according to claim 1, 2 or 3, wherein the port is an RS232 type port, and the communications link comprises an RS232 type plug.

5. Apparatus according to any preceding claim, wherein the playback control device (22, 24) and the record control device (22, 24) are mounted in the housing of the input unit, the housing further comprising a loudspeaker (48) for reproducing the signals during playback.

6. Apparatus according to any preceding claim, wherein the computer is a portable computer, whereby the dictation apparatus is portable.

7. Apparatus according to any preceding claim, wherein the converter circuitry in the input unit comprises an analog-to digital converter (18) for receiving the analog signal from the microphone (14), and a digital signal processor (20) coupled between the analog-to-digital converter (16) and the communication link (30).

8. Apparatus according to claim 7, wherein the circuitry in the input unit further comprises a digital to analog converter (44) coupled to the digital signal processor (20) for generating analog output signals for output by the or a loudspeaker (48) in the unit.

9. Apparatus according to any preceding claim, wherein the input unit is in the form of a handset.

10. Dictation apparatus for connection to a computer to form a dictation system, the apparatus comprising an input unit and a communications link (30) for coupling the unit to a said computer, the unit comprising:
a housing (12);
a microphone (14) mounted in said housing for receiving speech and for transforming the speech into an analog voice signal;
convener circuitry (18, 20) in said housing for converting the analog voice signal into a digital voice signal of a form suitable for storage in a digital computer memory;
an output (28) for outputting the digital signals from the unit; characterised in that the unit is operable to present the digital signals as a real-time representation of the speech as the speech is received, whereby the signals can be communicated to the computer to effect a live recording into said computer, the unit being further characterised by manually operable record and playback controls (24) on said housing for generating control signals for outputting to the communications link to control the computer, the record control being operable to develop an electrical record control signal for controlling a recording operation for recording speech into said computer, and said playback control being operable to develop an electrical playback control signal for controlling a playback operation for the playback of speech directly from the computer.

11. Apparatus according to claim 10, wherein the converter circuitry comprises an analog-to-digital converter (18) for receiving signals from the microphone (14), and a digital signal processor (20) for receiving the digital output of from the analog-to-digital converter.

12. Apparatus according to claim 11, wherein the digital signal processor (20) comprises compression means for compressing the digital voice signal.

13. Apparatus according to claim 10, 11 or 12, wherein the unit further comprises a digital-to-analog converter (44) for converting a digital voice signals into analog form, and a loudspeaker (48) in said housing for reproducing the analog voice signals.

14. Apparatus according to any of claims 10 to 13, wherein the unit is in the form of a handset.

15. Apparatus according to any of claims 10 to 14, wherein the communication link comprises a conductor having at one end a first connector for connection to the unit, and at the other end a second connector (35) for connection to a port (32) of said computer.

16. Apparatus according to claim 15, wherein the second connector (35) is an RS232 type connector.

## Patentansprüche

1. Schallaufzeichnungs- und Wiedergabevorrichtung (10) zum Diktieren, mit:
einer Diktat-Eingabeeinheit, welche ein Gehäuse (12), ein Mikrofon (14) in dem Gehäuse und einen Wandlerschaltkreis (18, 20) für das Umwandeln des analogen Ausgangssignales von dem Mikrofon in ein für die Speicherung in einem digitalen Speicher geeignetes, digitales Signal aufweist,
einem Computer (34) für allgemeine Zwecke, welche einen Prozessorschaltkreis (36), einen digitalen Speicher (38) und einen Kommunikationsanschluß (32) aufweist,
einem Stecker für eine Kommunikationsverbindung (30), welcher an dem Anschluß (32) des Computers vorgesehen ist, um Kommunikationssignale zwischen der Eingabeeinheit und dem Computer auszutauschen, **gekennzeichnet durch:**
eine Aufzeichnungssteuereinrichtung (22, 24) einschließlich einer manuellen Aufzeichnungssteuerung an dem Gehäuse, um über die Kommunikationsverbindung ein Steuersignal auszusenden, um den Computer so zu steuern, daß er das digitale Signal aus dem Schaltkreis der Eingabeeinheit in dem Computerspeicher aufzeichnet, und
eine Steuereinrichtung (22, 24) für die Wiedergabe, einschließlich einer manuellen Wiedergabesteuerung an dem Gehäuse, um ein Steuersignal über die Kommunikationsverbindung an den Computer abzusenden, um die Wiedergabesignale direkt von dem Computerspeicher aus zu steuern.

2. Vorrichtung nach Anspruch 1, wobei der Anschluß ein Datenanschluß ist.

3. Vorrichtung nach-Anspruch 1 oder 2, wobei der Anschluß des Computers eine Aufnahmeeinrichtung (32) für einen industriellen Standardanschluß aufweist, wobei die Kommunikationsverbindung einen elektrischen Leiter aufweist, der durch einen standardmäßigen, industriellen Stecker (35) abgeschlossen ist, welcher nach Art einer Steckverbindung in die Aufnahme eingesteckt werden kann.

4. Vorrichtung nach Anspruch 1, 2 oder 3, wobei der Anschluß ein RS232-Anschluß (Schnittstelle) ist und die Kommunikationsverbindung einen Stecker vom RS232-Typ aufweist.

5. Vorrichtung nach einem der vorstehenden Ansprüche, wobei die Wiedergabesteuerungseinrichtung (22, 24) und die Aufzeichnungssteuereinrichtung (22, 24) in dem Gehäuse der Eingabeeinheit montiert sind, wobei das Gehäuse weiterhin einen Lautsprecher (48) für die Wiedergabe der Signale während des Abspielens aufweist.

6. Vorrichtung nach einem der vorstehenden Ansprüche, wobei der Computer ein tragbarer Computer ist, wodurch das Diktiergerät tragbar ist.

7. Vorrichtung nach einem der vorstehenden Ansprüche, wobei der Wandlerschaltkreis in der Eingabeeinheit einen Analog/Digitalwandler (18) für den Empfang des Analogsignals von dem Mikrofon (14) und einen digitalen Signalprozessor (20) aufweist, der zwischen den Analog/Digitalwandler (16) und die Kommunikationsverbindung (30) geschaltet ist.

8. Vorrichtung nach Anspruch 7, wobei der Schaltkreis in der Eingabeeinheit weiterhin einen Digital/Analogwandler (44) aufweist, der mit dem digitalen Signalprozessor (20) verbunden ist, um für die Ausgabe durch einen Lautsprecher (48) in der Einheit analoge Ausgangssignale zu erzeugen.

9. Vorrichtung nach einem der vorstehenden Ansprüche, wobei die Eingabeeinheit in Form eines Handgerätes vorliegt.

10. Diktiergerät für den Anschluß an einen Computer, um ein Diktiersystem zu bilden, wobei die Vorrichtung aufweist:
ein Gehäuse (12),
ein Mikrofon (14), welches in dem Gehäuse montiert ist, um Sprache aufzunehmen und um die Sprache in ein analoges Stimmsignal umzuwandeln,
einen Wandlerschaltkreis (18, 20) in dem Gehäuse für das Umwandeln des analogen Stimmsignales in ein digitales Stimmsignal einer Form, die für die Speicherung in einem digitalen Computerspeicher geeignet ist,
einen Ausgang (28) für die Ausgabe der digitalen Signale von der Einheit, **dadurch gekennzeichnet**, daß die Einheit so betreibbar ist, daß sie die digitalen Signale als Echtzeitwiedergabe der Sprache wiedergibt, während die Sprache empfangen wird, wodurch die Signale an den Computer übermittelt werden können, damit dieser eine Live-Aufzeichnung in dem Computer bewirkt, wobei die Einheit weiterhin gekennzeichnet ist durch manuell bedienbare Aufzeichnungs- und Wiedergabesteuerungen (24) an dem Gehäuse, um Steuersignale für die Ausgabe an das Verbindungsglied für die Steuerung des Computers zu erzeugen, wobei die Aufzeichnungssteuerung so betreibbar ist, daß sich ein elektrisches Wiedergabesteuersignal für die Steuerung eines Wiedergabebetriebes für das Wiedergeben von Sprache unmittelbar von dem Computer entwickelt.

11. Vorrichtung nach Anspruch 10, wobei der Wandlerschaltkreis einen Analog/Digitalwandler (18) für den Empfang von Signalen von dem Mikrofon (14) aufweist, und einen digitalen Signalprozessor (20) aufweist, um den digitalen Ausgangswert von dem Analog/Digitalwandler zu empfangen.

12. Vorrichtung nach Anspruch 11, wobei der digitale Signalprozessor (20) eine Kompressionseinrichtung für das Zusammendrücken des digitalen Stimmsignales aufweist.

13. Vorrichtung nach Anspruch 10, 11 oder 12, wobei die Einheit weiterhin einen Digital/Analogwandler (44) für das Umwandeln digitaler Stimmsignale in analoge Form sowie einen Lautsprecher (48) in dem Gehäuse aufweist, um analoge Stimmsignale wiederzugeben.

14. Vorrichtung nach einem der Ansprüche 10 bis 13, wobei die Einheit in Form eines Handgerätes vorliegt.

15. Vorrichtung nach einem der Ansprüche 10 bis 14, wobei das Verbindungsglied weiterhin einen Leiter aufweist, der mit einem Ende an einem ersten Anschluß für eine Verbindung mit der Einheit vorgesehen ist und der zum anderen einen zweiten Anschluß (35) für die Verbindung mit einem Anschlußstück (32) des Computers hat.

16. Vorrichtung nach Anspruch 15, wobei der zweite Anschluß (35) eine Verbindung bzw. ein Stecker vom Typ RS232 ist.

## Revendications

1. Appareil d'enregistrement et de reproduction sonore (10) destiné à la dictée, comprenant :
une unité d'entrée de dictée comprenant un boîtier (12), un microphone (14) monté dans ledit boîtier, une circuiterie de convertisseur (18, 20) pour convertir le signal de sortie analogique provenant du microphone en un signal numérique approprié à un stockage dans une mémoire numérique ;
un ordinateur universel (34) comprenant un circuit processeur (36), une mémoire numérique (38), et un port de communications (32) ;
une fiche de liaison de communications (30) connectée au port (32) de l'ordinateur pour communiquer des signaux entre l'unité d'entrée et l'ordinateur ; caractérisé par :
un moyen de commande d'enregistrement (22, 24) incluant une commande d'enregistrement manuelle montée sur ledit boîtier pour envoyer un signal de commande sur la liaison de communicatinos afin de commander à l'ordinateur d'enregistrer le signal numérique provenant de la circuiterie de l'unité d'entrée dans la mémoire de l'ordinateur ; et
un moyen de commande de lecture (22,24) incluant une commande de lecture manuelle montée sur ledit boîtier, pour envoyer un signal de commande sur la liaison de communications à l'ordinateur afin de commander la reproduction des signaux directement à partir de la mémoire de l'ordinateur.

2. Appareil selon la revendication 1, dans lequel le port est un port de données.

3. Appareil selon la revendication 1 ou la revendication 2, dans lequel le port de l'ordinateur inclut une prise femelle de port aux normes de l'industrie (32), la liaison de communications comprend un conducteur se terminant par une fiche aux normes de l'industrie (35) qui peut être connectée par enfichage dans la prise femelle.

4. Appareil selon la revendication 1, 2 ou 3, dans lequel le port est un port du type RS232, et la liaison de communications comprend une fiche du type RS232.

5. Appareil selon l'une quelconque des revendications précédentes, dans lequel le dispositif de commande de lecture (22, 24) et le dispositif de commande d'enregistrement (22, 24) sont montés dans le boîtier de l'unité d'entrée, le boîtier comprenant de plus un haut-parleur (48) pour reproduire les signaux durant la lecture.

6. Appareil selon l'une quelconque des revendications précédentes, dans lequel l'ordinateur est un ordinateur portable, l'appareil de dictée étant de ce fait portable.

7. Appareil selon l'une quelconque des revendications précédentes, dans lequel la circuiterie de convertisseur dans l'unité d'entrée comprend un convertisseur analogique-numérique (18) pour recevoir le signal analogique provenant du microphone (14), et un processeur de signaux numériques (20) couplé entre le convertisseur analogique-numérique (16) et la liaison de communications (30).

8. Appareil selon la revendication 7, dans lequel la circuiterie dans l'unité d'entrée comprend de plus un convertisseur numérique-analogique (44) couplé au processeur de signaux numériques (20) pour générer des signaux de sortie analogiques destinés à être délivrés par le ou un hautparleur (48) prévu dans l'unité.

9. Appareil selon l'une quelconque des revendications précédentes, dans lequel l'unité d'entrée se présente sous la forme d'un combiné tenu dans la main.

10. Appareil de dictée destiné à être connecté à un ordinateur pour former un système de dictée, l'appareil comprenant une unité d'entrée et une liaison de communications (30) pour coupler l'unité audit ordinateur, l'unité comprenant :
un boîtier (12) ;
un microphone (14) monté dans ledit boîtier pour recevoir la parole et pour transformer la parole en un signal vocal analogique ;
une circuiterie de convertisseur (18, 20) montée dans ledit boîtier pour convertir le signal vocal analogique en un signal vocal numérique d'une forme appropriée à un stockage dans une mémoire d'ordinateur numérique ;
une sortie (28) pour délivrer les signaux numériques à partir de l'unité ; caractérisé en ce que l'unité peut être mise en oeuvre pour présenter les signaux numériques comme une représentation en temps réel de la parole au fur et à mesure que la parole est reçue, si bien que les signaux peuvent être communiqués à l'ordinateur pour effectuer un enregistrement en direct dans ledit ordinateur, l'unité étant de plus caractérisée par des commandes d'enregistrement et de lecture pouvant être mises en oeuvre manuellement (24) montées sur ledit boîtier pour générer des signaux de commande destinés à être délivrés à la liaison de communications afin de commander l'ordinateur, la commande d'enregistrement pouvant être mise en oeuvre pour développer un signal de commande d'enregistrement électrique afin de commander une opération d'enregistrement pour enregistrer la parole dans ledit ordinateur, et la commande de lecture pouvant être mise en oeuvre pour développer un signal de commande de lecture électrique pour commander une opération de lecture pour la reproduction de la parole directement à partir de l'ordinateur.

11. Appareil selon la revendication 10, dans lequel la circuiterie de convertisseur comprend un convertisseur analogique-numérique (18) pour recevoir des signaux provenant du microphone (14), et un processeur de signaux numériques (20) pour recevoir la sortie numérique provenant du convertisseur analogique-numérique.

12. Appareil selon la revendication 11, dans lequel le processeur de signaux numériques (20) comprend des moyens de compression pour compacter le signal vocal numérique.

13. Appareil selon la revendication 10, 11 ou 12, dans lequel l'unité comprend de plus un convertisseur numérique-analogique (44) pour convertir des signaux vocaux numériques en une forme analogique, et un haut-parleur (48) monté dans le boîtier pour reproduire les signaux vocaux analogiques.

14. Appareil selon l'une quelconque des revendications 10 à 13, dans lequel l'unité se présente sous la forme d'un combiné tenu dans la main.

15. Appareil selon l'une quelconque des revendications 10 à 14, dans lequel la liaison de communications comprend un conducteur comportant, à une extrémité, un premier connecteur pour une connexion à l'unité, et à l'autre extrémité, un second connecteur (35) pour une connexion à un port (32) dudit ordinateur.

16. Appareil selon la revendication 15, dans lequel le second connecteur (35) est un connecteur du type RS232.
